# FASCICULE DE BREVET EUROPEEN

(11) **EP 3 738 910 B1**
(45) Date de publication et mention de la délivrance du brevet: **20.03.2024**
(21) Numéro de dépôt: 20174803.5
(22) Date de dépôt: 14.05.2020
(51) Int. Cl.: B65G 47/26, B65G 47/82, B65G 25/06, B65G 45/00

(54) **DISPOSITIF D'ACCOMPAGNEMENT DE PRODUITS, INSTALLATION DE CONDITIONNEMENT ET PROCEDE DE VIDANGE**
PRODUKTBEGLEITVORRICHTUNG, VERPACKUNGSANLAGE UND ENTLEERUNGSVERFAHREN
PRODUCT ASSISTANCE DEVICE, PACKAGING INSTALLATION AND DRAINING METHOD

(30) Priorité: 16.05.2019 FR 1905105
(43) Date de publication de la demande: 18.11.2020
(73) Titulaire: SIDEL PACKING SOLUTIONS, 21910 Corcelles-les-Cîteaux (FR)
(72) Inventeur: CHOPLIN, Grégory, 21910 CORCELLES-LES-CITEAUX (FR)
(74) Mandataire: Sidel Group

(56) Documents cités:
- WO-A2-2012/056140
- US-A- 3 788 497
- US-A- 5 667 055

## Description

La présente invention entre dans le domaine du convoyage de produits au sein d'une ligne industrielle de production et de conditionnement desdits produits.

De tels produits peuvent être, de façon non limitative, des récipients, tels des bouteilles, cannettes, briques cartonnées. De tels récipients se présentent généralement à l'unité.

De manière connue, au sein d'une ligne industrielle, les produits peuvent recevoir plusieurs traitements successifs au sein de postes différents, allant de la fabrication du contenant par une opération d'injection plastique et/ou d'étirage-soufflage, en passant notamment par le remplissage, le bouchage et l'étiquetage des produits à l'unité, jusqu'au conditionnement en lots de plusieurs produits regroupés.

Au cours de ces différentes étapes, les produits sont transportés par différents moyens de convoyages adaptés. En particulier, le long de ladite ligne de production, les produits peuvent être transportés en face supérieure d'un ou plusieurs convoyeurs successifs, notamment de type à bande sans fin : le fond des produits reposant en face supérieure d'un tel convoyeur.

Plus avant, au cours de leur traitement, les produits sont convoyés en un flux continu et compact, à savoir au contact les uns des autres, de façon désordonnée en quinconce ou en vrac, ou bien de façon alignée selon une ou plusieurs files. En particulier, en entrée de certains postes de traitement, les produits peuvent être organisés en une ou plusieurs files par l'intermédiaire de couloirs, pourvus de parois verticales, sensiblement parallèles entre elles et s'étendant supérieurement le long des convoyeurs. Chaque file de produits est alors transportée entre les parois d'un couloir, les produits de chaque file se succédant les uns derrières les autres le long de la direction de convoyage. En somme, le flux continu est alors séparé en plusieurs flux unifilaires de produits.

Dans ce contexte, il peut être nécessaire de séparer les files en plusieurs rangs transversaux, afin de former des lots de produits espacés, par exemple en vue de leur conditionnement, notamment par fardelage. Une telle séparation des files en rangs s'effectue au travers d'un poste dédié, au cours d'une étape de sélection.

En l'état, généralement plusieurs convoyeurs se succèdent, formant à leurs extrémités aboutées un creux qu'il est nécessaire de combler afin d'éviter le basculement des produits lors de leur passage depuis l'un vers l'autre desdits convoyeurs. Le creux est généralement recouvert d'une plaque positionnée en affleurement des faces supérieures de convoyeurs adjacents. Cette plaque forme un plat de transfert, appelé communément une zone « morte », sur laquelle les produits progressent en frottement, sous l'effet de la poussée des produits déplacés par le convoyeur situé en amont.

Si en cours de production, avec des files compactes de produits, le passage de cette zone morte s'effectue sous la force de poussée combinée des produits en amont, permettant de compenser les frottements le long de cette zone morte. Il en est autrement en fin de production, au moment de la vidange des machines, où sans la masse des produits en amont nécessaire à la poussée, ces produits se retrouvent freinés jusqu'à être arrêtés lors de leur arrivée sur zone morte, générant un arrêt du flux de produits, ainsi que potentiellement un risque d'être déséquilibrés, voire de chuter. WO2012/056140 divulgue un dispositif selon le préambule de la revendication 1 et un procédé selon le préambule de la revendication 10.

Lors de la vidange, on passe dans un mode dégradé de production, afin qu'un opérateur puisse contrôler le flux de produits et intervenir le cas échéant.

Actuellement, en cas de constat d'un défaut dans la progression des produits, une intervention est effectuée manuellement par un opérateur. La vidange est arrêtée et l'opérateur intervient, notamment en montant au niveau de l'installation, s'il faut repositionner un ou plusieurs produits, surtout s'ils se situent dans un couloir au centre des convoyeurs. Outre la précarité d'une telle intervention, on comprend aisément les risques induits pour l'opérateur qui doit se pencher, voire se faufiler entre les différents éléments. Il a même déjà été observé qu'un opérateur doit régulièrement se positionner pour pousser lui-même à la main les derniers produits d'une file, alors que certains éléments de l'installation sont en cours de fonctionnement, créant une situation extrêmement risquée. Par ailleurs, une telle intervention humaine est susceptible de détériorer l'installation, non prévue pour recevoir le poids d'une personne.

Une solution existante et empirique consiste, au moment de la vidange, après le passage des derniers produits, à positionner manuellement des poussoirs, aussi appelés « sabots », derrière le dernier produit de chaque file et à l'entrée de chacun des couloirs. Un tel poussoir présente un poids conséquent et une adhérence élevée, afin de reproduire une poussée suffisante pour permettre aux derniers produits de franchir la zone morte sans risque de chute, tout en conservant la continuité et le caractère compact de chaque file. Un tel sabot s'arrête sur la zone morte, du fait de sa masse, ainsi que des patins adhérents positionnés en face inférieure.

Une fois les derniers produits traités, les poussoirs peuvent être retirés des couloirs. Cette opération s'effectue encore une fois manuellement, un opérateur devant intervenir pour extraire chaque poussoir de chaque file, notamment en grimpant encore une fois sur l'installation.

En outre, la masse des poussoirs rend contraignante leur manipulation, en particulier lors de leur positionnement au sein des couloirs.

L'invention a pour but de pallier les inconvénients de l'état de la technique en proposant un dispositif d'accompagnement de produits convoyés au sein d'une ligne de production et conditionnement, au travers de moyens de poussée de chaque dernier produit. Avantageusement, un tel dispositif d'accompagnement permet une fois les produits accompagnés jusqu'à une position déterminée, de ramener les moyens de poussée.

Un tel dispositif d'accompagnement s'applique pour des produits transportés en face supérieure d'au moins un convoyeur en au moins une file le long d'au moins un couloir correspondant selon une direction de déplacement depuis l'amont vers l'aval.

Ledit dispositif d'accompagnement comprend
- des moyens de poussée de chaque dernier produit situé en amont de chaque file ;
- chaque moyen de poussée étant mobile depuis une position amont jusqu'à une position avale ;
caractérisé en ce qu'il comprend :
- des moyens de rappel desdits moyens de poussée depuis ladite position avale jusqu'à ladite position amont, chaque moyen de poussée étant mobile au moins depuis l'amont vers l'aval selon un déplacement libre induit par ledit au moins un convoyeur.

Le dispositif d'accompagnement peut comprendre un moyen de déplacement vertical desdits moyens de poussée entre une position de dépose et une position escamotée, et inversement.

Il peut comprendre un moyen d'écartement desdits moyens de poussée de façon indépendante les uns des autres et transversalement par rapport à ladite direction de déplacement.

Il peut comprendre un châssis supportant lesdits moyens de poussée et configuré pour s'étendre au-dessus dudit au moins un convoyeur.

Lesdits moyens de poussée peuvent comprendre une pluralité de sabots indépendants pourvus :
- en face inférieure au moins une surface adhérente ;
- en face située en aval, au moins un organe de poussée ;
- supérieurement de moyens de préhension manuelle ;
- des moyens d'accostage ;
   et/ou
- de moyens d'arrimage.

Lesdits moyens de rappel peuvent comprendre :
- des moyens de liaison de chacun desdits moyens de poussées ;
- au moins un moyen de déploiement desdits moyens de liaison depuis la position amont vers la position aval, et inversement selon ledit sens inverse.

Lesdits moyens de liaison peuvent comprendre :
- au moins un filin/câble, lesdits moyens de déploiement comprenant un système de poulie coopérant avec ledit au moins un câble ;
   ou
- au moins une chaîne, lesdits moyens de déploiement comprenant au moins un pignon ou une poulie coopérant en engrènement avec ladite au moins une chaîne ;
   ou
- au moins un bras robotisé préhenseur de chacun desdits moyens de poussée.

L'invention concerne aussi une installation de conditionnement de produits comprenant au moins :
- un convoyeur amont d'alimentation en produits ;
- un convoyeur aval ;
- une zone de glissement située entre le convoyeur amont et de convoyeur aval ;
- au moins un couloir s'étendant au moins le long d'une partie desdits convoyeurs, ledit au moins un couloir délimitant au moins une file correspondante de produits ;
- au moins un poste de groupage en rangs des produits de chaque file, ledit poste de groupage étant situé au niveau dudit convoyeur amont ;

Une telle installation comprend en amont dudit poste de groupage, ledit dispositif d'accompagnement des produits.

De façon additionnelle, une telle installation peut comprendre un poste de fardelage ou un poste d'encaissage situé en aval dudit poste de groupage.

L'invention concerne encore un procédé de vidange de produits au sein d'une ligne de production et de conditionnement, mettant en oeuvre le dispositif d'accompagnement défini dans l'une quelconque des revendications 1 à 7.

Lors d'un tel procédé de vidange :
- on transporte un flux de produits en au moins une file en face supérieure d'au moins un convoyeur, selon une direction de déplacement depuis l'amont vers l'aval ;
- en fin dudit flux, on dépose au niveau d'une position amont, derrière chaque file après le passage de ladite position amont du dernier produit situé en amont de chaque file, des moyens de poussée de chaque dernier produit ;
- chacun des moyens de poussée est déplacé jusqu'à une position avale située en aval de ladite position amont.

Ce procédé de vidange se caractérise en ce qu'on rappelle en déplacement retour lesdits moyens de poussée depuis ladite positon avale jusqu'à ladite position amont.

De façon additionnelle, non limitativement, on peut rappeler automatiquement en sens inverse les moyens de poussée.

On peut rappeler les moyens de poussée par rotation sens inverse dudit convoyeur amont.

D'autres caractéristiques et avantages de l'invention ressortiront de la description détaillée qui va suivre des modes de réalisation non limitatifs de l'invention, en référence aux figures annexées, dans lesquelles :
La figure 1 représente schématiquement une vue en perspective d'un mode de réalisation d'un dispositif d'accompagnement, pourvu d'un portique, avec les poussoirs en position relevée ;
La figure 2 représente schématiquement une vue en perspective du mode de réalisation de la figure 1, implanté sur un convoyeur pourvu de couloirs, avec les poussoirs en position abaissée ;
La figure 3 représente schématiquement une vue en perspective d'un exemple de réalisation d'un poussoir ;
La figure 4 représente schématiquement une vue simplifiée de dessus d'un mode de réalisation dudit dispositif, montrant des poussoirs dans une position initiale de poussée de plusieurs files de produits en couloirs ;
La figure 5 représente schématiquement une vue simplifiée selon une coupe verticale de la figure 4 ;
La figure 6 représente schématiquement une vue simplifiée similaire à la figure 5, dans une autre position ultérieure de poussée ;
La figure 7 représente schématiquement une vue simplifiée selon une coupe verticale d'un exemple de poussoir, dans une première position, au moment de son arrivée auprès d'une zone de glissement ;
La figure 8 représente schématiquement une vue similaire à la figure 7, montrant le poussoir dans une seconde position, en fin de poussée, lorsqu'il vient sur ladite zone de glissement ;
La figure 9 représente schématiquement une vue similaire à la figure 6, montrant un poussoir lors de son rappel vers la position initiale ;
La figure 10 représente schématiquement une vue similaire à la figure 7, montrant un poussoir lors de son rappel dans une première position de prélèvement ; et
La figure 11 représente schématiquement une vue similaire la figure 10, montrant le poussoir dans une autre position de prélèvement.

L'invention concerne le transport de produits 1 en vue de leur traitement au sein d'une ligne de production et de conditionnement.

De tels produits 1 peuvent être, de façon non limitative, des récipients, tels des bouteilles, cannettes, briques cartonnées. De tels récipients se présentent généralement à l'unité.

De manière connue, au sein d'une ligne industrielle, les produits 1 peuvent recevoir plusieurs traitements successifs au sein de postes différents, allant de la fabrication du contenant par une opération d'injection plastique et/ou d'étirage-soufflage, en passant notamment par le remplissage, le bouchage et l'étiquetage des produits à l'unité, jusqu'au conditionnement en lots de plusieurs produits regroupés.

Au cours de ces différentes étapes, les produits 1 sont transportés par différents moyens de convoyages adaptés. En particulier, le long de ladite ligne de production, les produits 1 peuvent être transportés en face supérieure d'un ou plusieurs convoyeurs 2 successifs, notamment de type à bande sans fin : le fond des produits 1 reposant en face supérieure d'un tel convoyeur 2.

Ainsi, dans le cadre de la présente invention, lesdits produits 1 sont convoyés en étant transportés en face supérieure d'au moins un convoyeur 2. Les produits 1 sont déplacés par chaque convoyeur 2 selon une direction de déplacement depuis l'amont vers l'aval. Une telle direction de déplacement s'étend généralement longitudinalement, le long du ou des convoyeurs 2.

A ce titre, plusieurs convoyeurs 2 peuvent être aboutés, séparés par une surface fixe ou immobile, appelée « zone morte » 3. Une telle zone morte 3 peut comprendre une ou plusieurs plaques, disposées entre les extrémités de deux convoyeurs 2 successifs, comblant l'espacement entre ces extrémités.

Préférentiellement, les faces supérieures des convoyeurs 2, ainsi que de la zone morte 3, sont plus ou moins en affleurement, dans un plan horizontal ou sensiblement horizontal, assurant ainsi le passage des produits depuis le convoyeur 20 situé en amont vers le convoyeur 21 situé en aval, par l'intermédiaire de ladite zone morte 3 faisant office de jonction entre eux.

Préférentiellement, les convoyeurs 2,20,21 sont de type à bande sans fin. Une ou plusieurs bandes sans fin disposées transversalement, sur la largeur, peuvent constituer chaque convoyeur 2,20,21. Chaque bande sans fin d'un convoyeur 2,20,21 peut être motorisée par un même moteur ou de façon indépendante par des motorisations distinctes.

Les produits 1 sont ainsi transportés en au moins une file le long d'au moins un couloir 4 correspondant. En somme, chaque file de produits 1 est guidée à l'intérieur d'un couloir 4. De préférence, plusieurs files de produits 1 se déplacent le long de plusieurs couloirs 4. Plusieurs couloirs 4 s'étendent longitudinalement, selon la direction de déplacement. Les couloirs 4 sont parallèles ou sensiblement parallèles entre eux. Chaque couloir 4 est formé par au moins deux parois latérales 40, une paroi 40 pouvant être commune à deux couloirs 4 adjacents. Chaque paroi 40 s'étend en face supérieure du ou des convoyeurs 2,20,21, ainsi que préférentiellement de la zone morte 3. Chaque paroi 40 s'étend dans un plan orthogonal au plan du ou des convoyeurs 2,20,21. Préférentiellement, à chaque couloir 4 correspond une des bandes sans fin d'un convoyeur 2,20,21.

De façon connexe, les produits 1 peuvent être répartis en files en amont des couloirs 4 par un poste adapté, à partir notamment un flux en vrac ou quinconce, ou bien d'un ou plusieurs flux unifilaires de produits 1. Ces flux sont alors orientés vers chaque couloir 4 pour former chaque file de produits 1 qui sera déplacée par les convoyeurs 2,20,21, via la zone morte 3, le long des couloirs 4.

Dans ce contexte, l'invention vise à accompagner les produits 1, en particulier chaque file de produits 1, tout particulièrement en fin de production, à savoir au moment de la vidange.

En effet, lors de la vidange des machines, on arrive à la fin du flux de produits 1. Lors de la vidange, on passe dans un mode dégradé de production, afin qu'un opérateur puisse contrôler le flux de produits 1 et intervenir le cas échéant. En effet, sans la masse des produits 1 en amont nécessaire à la poussée, ces produits 1 se retrouvent freinés jusqu'à être arrêtés lors de leur arrivée sur zone morte 3. L'invention prévoit donc d'accompagner les produits 1 dans leur déplacement en face supérieure des convoyeurs 2,20,21, tout particulièrement pour leur passage sur la zone morte 3. En effet, ladite zone morte 3 forme une tôle de transfert non motorisée, sur laquelle la progression des produits 1 s'effectue uniquement en glissement par la poussée des autres produits 1 entraînés depuis l'amont.

Pour ce faire, l'invention concerne un dispositif d'accompagnement 5, qui permet d'améliorer le déplacement des derniers produits 1, tout particulièrement au moment de la vidange. Un tel accompagnement est effectué par poussée des derniers produits 1 depuis l'arrière.

Ainsi, ledit dispositif d'accompagnement 5 comprend des moyens de poussée 6 de chaque dernier produit 1 situé en amont de chaque file. En somme, le dispositif d'accompagnement 5 comprend au moins autant de moyens de poussée 6 que de files de produits 1 à accompagner le long de chaque couloir 4. En particulier, cet accompagnement par les moyens de poussée 6 s'effectue essentiellement le long du convoyeur amont 20, ainsi qu'éventuellement sur une partie de la zone morte 3, jusqu'à ce que les produits 1 soient pris en charge par le convoyeur aval 21.

Pour ce faire, chaque moyen de poussée 6 est mobile depuis une position amont jusqu'à une position avale. La position amont peut être située avant les couloirs 4 ou en entrée des couloirs 4, tandis que la position avale si situe à la fin du convoyeur amont 20, au niveau de la zone morte 3.

Les moyens de poussée 6 peuvent être déplacés par des moyens adaptés. Chaque moyen de poussée 6 est mobile au moins depuis l'amont vers l'aval selon un déplacement libre induit par ledit au moins un convoyeur 2, de préférence sous l'action du convoyeur amont 20. Chaque moyen de poussée 6 est donc entraîné par le convoyeur 2 en face supérieure duquel il est positionné. En d'autres termes, chaque moyen de poussée 6 est placé sur le convoyeur 2 puis suit le mouvement de ce dernier.

A ce titre, afin d'autoriser le passage des produits 1 avant de placer les moyens de poussée 6 derrière le dernier produits 1, le dispositif d'accompagnement 5 peut comprendre un moyen de déplacement vertical 7 desdits moyens de poussée 6 entre une position de dépose et une position escamotée, et inversement. En position escamotée, le moyen de déplacement vertical 7 remonte les moyens de poussée 6 à une hauteur laissant libre le passage des produits 1 en dessous, tandis qu'en position de dépose, le moyen de déplacement vertical 7 descend les moyens de poussée 6 jusqu'à une distance au-dessus du convoyeur 2,20, notamment de quelques millimètres plus haut que ladite surface du convoyeur 2,20, ou bien pour qu'il descende les moyens de poussée 6 jusqu'à reposer en face supérieure du convoyeur 2,20.

Selon un mode de réalisation, ledit moyen de déplacement vertical 7 peut comprendre un support 70 mobile verticalement. Un tel support 70 peut recevoir un ou plusieurs moyens de poussée 6.

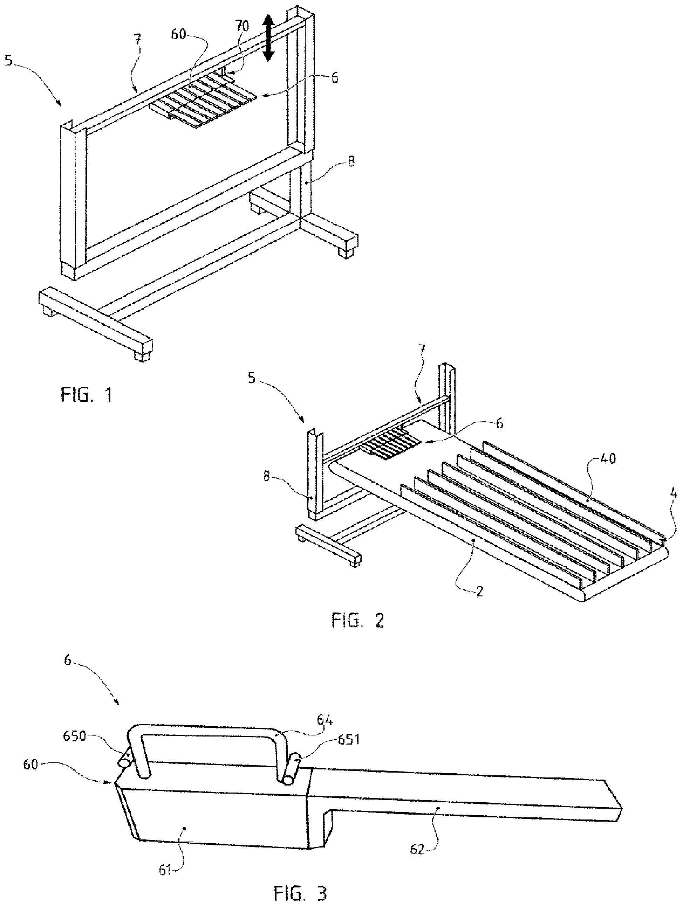

En outre, le dispositif d'accompagnement 5 peut comprendre un châssis 8 supportant lesdits moyens de poussée 6 et configuré pour s'étendre au-dessus dudit au moins un convoyeur 2, de préférence le convoyeur amont 20. Le châssis 8 peut s'apparenter à un portique, positionné à un emplacement de la ligne de production, d'un côté du convoyeur amont 20. Le châssis 8 peut posséder une embase qui vient reposer au sol ou bien être fixé à la structure de l'installation, notamment dudit convoyeur amont 20. Dès lors, le moyen de déplacement vertical 7 peut être monté mobile par rapport audit châssis 8. Un exemple d'un tel déplacement vertical est représenté par une flèche à double sens sur la figure 1.

Selon un mode de réalisation, le châssis 8 peut comprendre une partie supérieure supportant le moyen de déplacement vertical 7, ladite partie supérieure étant montée en pivotement, de manière à tourner autour d'un axe vertical ou sensiblement vertical, pour passer d'une position au-dessus du convoyeur amont 20 vers une position écartée, sur le côté de l'installation et dudit convoyeur amont 20, et inversement.

Selon un autre mode de réalisation, l'intégralité du dispositif d'accompagnement 5 ou la partie supérieure peut être mobile selon une translation transversalement par rapport au convoyeur 2,20, pour amener ledit dispositif d'accompagnement 5 dans la position écartée.

Ainsi, en position écartée, la partie haute du dispositif d'accompagnement 5 libère l'accès au convoyeur amont 20 et aux couloirs 4, notamment en vue d'opérations de maintenance et ou toute intervention ou supervision en cours de production.

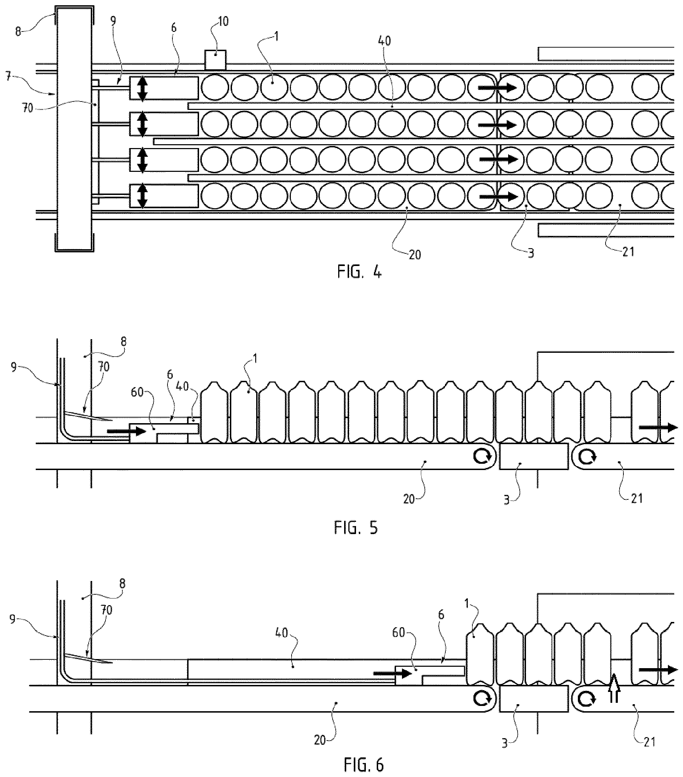

Comme évoqué précédemment, un moyen de poussée 6 est déposé pour assurer l'accompagnement des produits 1 le long de chaque couloir 4. Dès lors, le dispositif d'accompagnement 5 peut comprendre un moyen d'écartement desdits moyens de poussée 6 de façon indépendante les uns des autres et transversalement par rapport à ladite direction de déplacement. En somme, le moyen d'écartement permet de régler la position latérale de chaque moyen de poussée 6, afin de l'aligner en face de chaque couloir 4, pour qu'après sa dépose, chaque moyen de poussée 6 vienne circuler entre les parois 40 de son couloir 4. Un exemple d'un tel déplacement transversal, selon la largeur du convoyeur amont 20, est représenté par des flèches à double sens sur la figure 4.

En outre, le moyen d'écartement peut être prévu motorisé, notamment par l'intermédiaire d'un ou plusieurs moteurs, par exemple de type moteur linéaire, par moyen de poussée 6. Le moyen d'écartement peut être prévu manuelle, actionné par un opérateur.

Un tel réglage transversal des moyens de poussée 6 peut être opéré en position haute ou bien en position abaissée du moyen de déplacement vertical 7 juste avant que lesdits moyens de poussée 6 viennent au contact du convoyeur amont 20. Le réglage s'effectue manuellement ou par l'intermédiaire d'une motorisation adaptée, commune à tous les moyens de poussée 6 ou dédié à chacun d'entre eux.

Une fois les moyens de poussée 6 correctement positionnés, en vis-à-vis des couloirs correspondants, il est possible de les déposer après le passage du dernier produit 1 de chaque file. Dès lors, chaque moyen de poussée 6 est prévu amovible par rapport au dispositif d'accompagnement 5, en particulier par rapport au moyen de déplacement vertical 7, préférentiellement par rapport au support 70. Ainsi, chaque moyen de poussée 6 est solidaire du support 70 jusqu'à ce que chaque moyen de poussée 6 soit déposé en face supérieure du convoyeur amont 20, qui entraîne alors ledit moyen de poussée 6 et le retire dudit support 70.

Préférentiellement, lesdits moyens de poussée 6 comprennent une pluralité de sabots 60 indépendants. A chaque moyen de poussée 6 peut correspondre un unique sabot 60.

Un mode de réalisation d'un tel sabot 60 est représenté sur la figure 3. Un sabot 60 peut comprendre un bloc 61. Un tel bloc 61 présente une masse conséquente, de l'ordre de plusieurs kilogrammes, afin d'assurer le maintien par poussée du dernier produit 1 de la file correspondante.

Un tel sabot 60 peut comprendre en face située en aval, au moins un organe 62 de poussée. Un tel organe 62 est préférentiellement monté à l'avant du bloc 61, au travers d'une fixation permettant notamment de le retirer pour son remplacement. L'extrémité avale de l'organe 62 peut être préférentiellement plane, s'étendant verticalement ou sensiblement verticalement, comme visible notamment sur les figures 5 à 8. Selon d'autres réalisations possibles, l'extrémité avale de l'organe 62 peut être inclinée par rapport à la verticale, ou bien arrondie de façon concave ou convexe, en forme d'alcôve ou de réceptacle conformée complémentairement à la forme extérieure des produits 1, afin qu'ils viennent s'insérer au moins partiellement à l'intérieur d'un tel réceptacle, améliorant encore leur maintien au moment de l'accompagnement en poussée par le sabot 60.

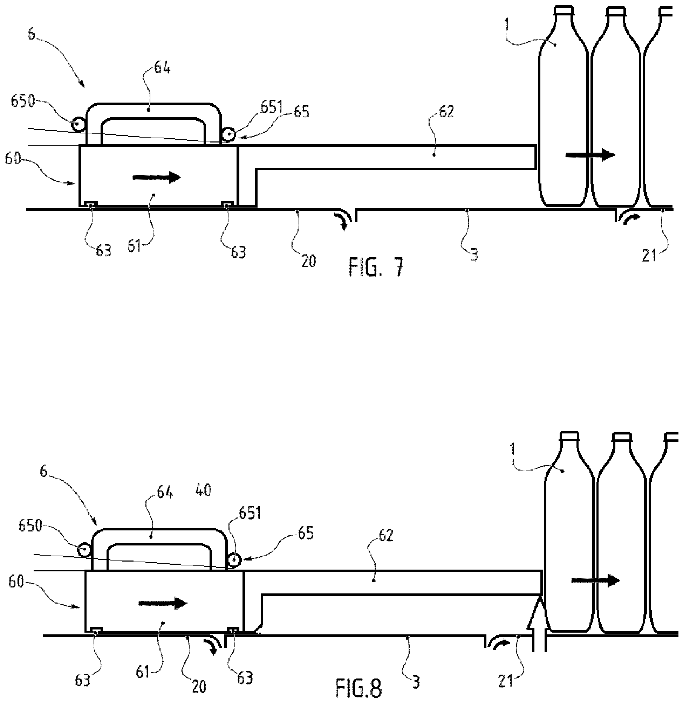

Comme visible notamment sur les figures 3 et 8, l'organe 62 d'un sabot 60 peut comprendre une forme allongée, creuse inférieurement. Ce creux permet à l'organe 62 de ne pas gêner une éventuelle prise en charge du dernier produit 1, notamment par des doigts venant s'élever par le dessous pour maintenir ledit dernier produit 1. Un exemple d'un doigt est modélisé par une flèche montante sur la figure 8.

En outre, cette forme spécifique offre un déport vertical assurant, d'une part, de venir au contact du dernier produit 1 de façon surélevée, évitant de le pousser par le bas et de risquer de le faire basculer. De préférence, le déport vertical peut conférer une force d'appui située approximativement au niveau du centre de gravité du produit 1, de préférence repartie au-dessus dudit centre de gravité.

Comme évoqué précédemment, chaque moyen de poussée 6, une fois relâché du support 70, est entraîné par le convoyeur amont 20 sur lequel il a été déposé. Chaque sabot 60 se déplace alors jusqu'à la position avale, en accompagnant les produits 1 de sa file, comme représenté sur les figures 5 et 6. Une fois arrivé au niveau de ladite position avale, le dernier produits 1 étant pris en charge par le convoyeur aval 21, le sabot 60 doit être arrêté. Pour ce faire, le sabot 60 peut comprendre en face inférieure au moins une surface 63 adhérente, de préférence plusieurs surfaces 63 adhérentes. Une surface 63 peut être située à l'avant sous le sabot 60, de manière à le freiner jusqu'à l'arrêt complet au contact de la zone morte 3, comme visible sur la figure 8. D'autres surface 63 adhérentes peuvent être disposés sous le sabot 60, notamment à l'arrière. Ces surfaces 63 assurent aussi le blocage du sabot 60 sur le convoyeur amont 20, l'empêchant de bouger pour permettre l'accompagnement des produits 1. Chaque surface 63 adhérente peut être constituée d'un plot ou patin en un matériau adapté, notamment en un matériau souple ou élastique, possédant un fort coefficient de frottement et améliorant l'adhérence, comme par exemple du polyuréthane. Un tel matériau à forte adhérence peut aussi être antidérapant. Chaque patin peut être en affleurement ou légèrement dépasser de la face inférieure de chaque sabot 60 Selon un mode préférentiel de réalisation, un sabot 60 peut comprendre des moyens de préhension manuelle 64, notamment sous forme d'une poignée. De tels moyens de préhension 64 peuvent préférentiellement s'étendre depuis le dessus dudit sabot 60. Un opérateur ou un bras robotisé peut alors venir saisir une telle poignée et soulever un sabot 60 par le dessus.

Selon un mode de réalisation, un sabot 60 comprend des moyens d'accostage 65. Ces moyens d'accostage 65 permettent la fixation amovible du sabot 60 sur le support 70. En d'autres termes, les moyens d'accostage 65 permettent au sabot 60 d'être assujetti au support 70, notamment lors des déplacements verticaux, mais aussi de le libérer au moment de la dépose. Les moyens d'accostage 65 peuvent aussi permettre la récupération du sabot 60, une fois qu'il s'est arrêté et a terminé d'accompagner les produits 1, pour le remettre sur le support 70 puis le relever vers la position escamotée. Selon le mode de réalisation préférentielle, les moyens d'accostage 65 sont situés en partie supérieure du sabot 60, coopérant alors par le dessus avec le support 70.

Avantageusement, l'invention prévoit de ramener les moyens de poussée 6, une fois qu'ils ont terminé d'accompagner les produits 1 de chaque file. Pour ce faire, le dispositif d'accompagnement 5 comprend des moyens de rappel 9 desdits moyens de poussée 6 depuis ladite position avale jusqu'à ladite position amont. En somme, de tels moyens de rappel 9 assure le retour des moyens de poussée 6 vers le support 70, en s'affranchissant de l'intervention manuelle d'un opérateur, surtout à l'intérieur du volume de circulation des produits 1 délimité au sein des couloirs 5.

Préférentiellement, les moyens de rappel 9 ramènent les moyens de poussée 6 en sens inverse. Le sens inverse s'étend selon la direction de déplacement mais à l'inverse du sens de défilement des produits 1 selon un sens d'avancement du convoyeur 2,20,21. En outre, le sens inverse est parallèle ou sensiblement parallèle audit sens de défilement des produits 1 et est orienté dans le sens contraire. Dès lors, le rappel en sens inverse peut s'effectuer en tractant les moyens de poussée 6 le long et en surface du convoyeur amont 20 et/ou en soulevant les moyens de poussées 6 afin qu'ils ne frottent pas en retour sur ladite face supérieure dudit convoyeur amont 20.

Selon un mode de réalisation, comme évoqué précédemment, les moyens de rappel 9 peuvent comprendre au moins un bras robotisé venant saisir chaque sabot 60, en particulier au niveau de son moyen de préhension 64. Ce bras robotisé peut être prévu multi-axes. Ce bras robotisé assure alors préférentiellement le déplacement en retour en soulevant chaque sabot 60 un par un, pour venir le remettre sur le support 70.

Selon un autre mode de réalisation, les moyens de rappel 9 peuvent comprendre un chariot autonome équipant ou dont sont pourvus les moyens de rappel 6, notamment chaque sabot 60. Un tel chariot peut embarquer une motorisation en déplacement de chaque sabot 60, notamment par l'intermédiaire de moyen de roulement venant coopérer en surface du convoyeur 20, permettant audit sabot 60 de se déplacer en sens inverse jusqu'à sa position de dépose, où il s'accoste sur le support 70. En outre, la vitesse de déplacement du chariot peut être supérieure à celle du convoyeur amont 20, permettant de continuer à faire avancer ledit convoyeur amont 20 lors du retour de chaque moyen de rappel 6. Par ailleurs, l'arrêt de la motorisation du chariot permet de stopper et maintenir le moyen de poussée 6 en surface du convoyeur amont 20, qui le déplace alors en vue d'effectuer l'accompagnement en poussée des produits 1.

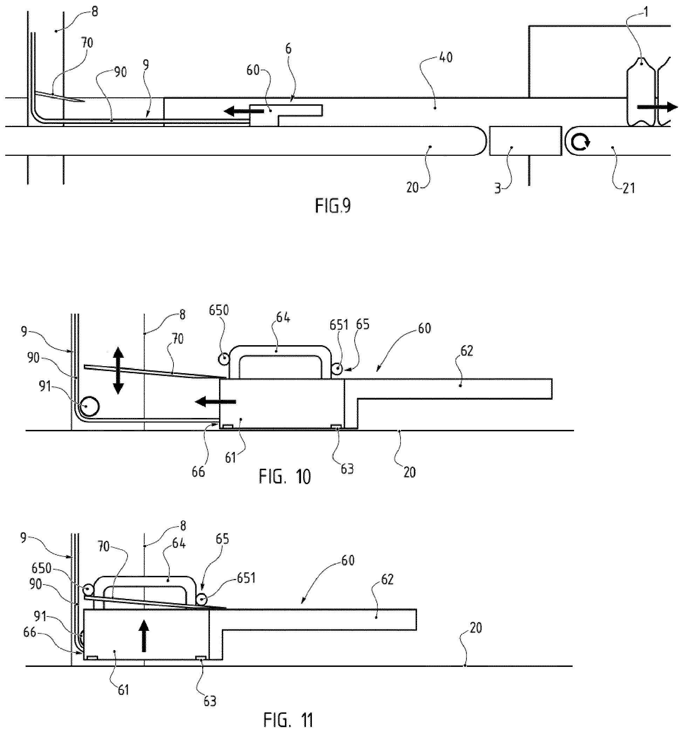

Préférentiellement, comme visible sur les figures 9 à 11, les moyens de rappel 9 peuvent comprendre des moyens de liaison 90 de chacun desdits moyens de poussées 6. Ces moyens de liaison 90 assure un lien entre chaque moyen de poussée 6 et le dispositif d'accompagnement 5, en particulier le châssis 8 et/ou le support 70. Chaque sabot 60 se retrouve alors relié au dispositif d'accompagnement 5 après sa dépose.

Pour ce faire, les moyens de rappel 9 peuvent aussi comprendre au moins un moyen de déploiement desdits moyens de liaison 90 depuis la position amont vers la position aval, et inversement selon ledit sens inverse. En d'autres termes, après la dépose lors de l'avancement de chaque sabot 60, les moyens de liaison 90 sont déroulés ou dévidés par l'action du moyen de déploiement, voire son embrayage/débrayage, jusqu'à l'arrêt de chaque sabot 60. Ensuite, le moyen de déploiement fonctionne en sens inverse et tracte en retour par enroulement/repliement chaque moyen de liaison 90, jusqu'à ce que chaque sabot 60 revienne dans sa position initiale, au moment de la dépose. Le retour sous l'action des moyens de déploiement peut aussi s'effectuer jusqu'à l'accostage des sabots 60 sur le support 70.

Selon un mode de réalisation, lesdits moyens de liaison 90 peuvent comprendre au moins un filin ou câble, lesdits moyens de déploiement comprenant alors un système de poulie 91 coopérant avec ledit au moins un câble.

Selon un autre mode de réalisation, lesdits moyens de liaison 90 peuvent comprendre au moins une chaîne, notamment constituée de maillons articulés entre eux, lesdits moyens de déploiement comprenant au moins un pignon ou une poulie coopérant en engrènement avec ladite au moins une chaîne.

Dans un cas comme dans l'autre, plusieurs pignons ou poulies 91 peuvent assurer le déploiement mais surtout le retour en repliement/enroulement des moyens de liaison 90. En outre, comme visible notamment sur les figures 10 et 11, une poulie 91 ou un pignon par sabot 60 peut être située en partie inférieure du support 70, faisant office de renvoi orthogonalement vers le haut de chaque moyen de liaison 90. Une telle poulie 91 inférieure peut être motorisé ou libre en rotation. Dans ce dernier cas, une autre poulie 91 ou un autre pignon peut être situé en partie supérieure, monté sur le châssis 8 ou sur le moyen de déplacement vertical 7, coopérant avec une motorisation adaptée.

En outre, un dévidoir adapté permet de recevoir en enroulement les moyens de liaisons 90 sous forme de fil, câble ou chaîne.

On notera que l'utilisation de moyens de liaison 90 sous forme de câble ou chaîne permet d'obtenir aisément des longueurs importantes de déploiement, permettant de laisser filer les moyens de poussée 6 sur des convoyeurs 2,20,21 de plusieurs mètres de long, en adaptant simplement la longueur correspondante de câble ou chaîne.

Selon un autre mode de réalisation, lesdits moyens de liaison 90 peuvent comprendre un système mécanique à barres articulées entre elles, notamment sous forme de bielles ou pantographe. Un tel système est monté à une extrémité sur le châssis 8 ou le moyen de déplacement vertical 7, notamment le support 70, tandis qu'il est relié à l'extrémité opposée à chaque moyen de poussée 6, notamment en face supérieure ou en face arrière de chaque sabot 60. Les articulations d'un tel système mécanique assurent des composantes de mouvement pour, d'une part, déposer et laisser chaque moyen de poussée 6 se déplacer en face supérieure du convoyeur amont 20 et, d'autre part, de le faire revenir vers la position d'origine, soit en le traînant en sens inverse, soit en le soulevant.

Selon encore un autre mode de réalisation, lesdits moyens de liaison 90 peuvent comprendre au moins ledit bras robotisé préhenseur de chacun desdits moyens de poussée 6.

Afin de relier chaque moyen de poussée 6 aux moyens de liaison 90, chaque sabot 60 peut comprendre des moyens d'arrimage 66. De tels moyens d'arrimage 66 peuvent être située en face arrière du sabot 60. Ils peuvent aussi être prévus amovibles, en vue de retirer un sabot 60 ou de remplacer le moyen de liaison 90.

Ainsi, au travers des moyens de rappel 9, l'invention permet de faire revenir les moyens de poussée 6 jusqu'à la position initiale où ils ont été déposés.

A ce titre, comme évoqué précédemment, au moment de leur retour en position initiale, chaque moyen de poussée remonte sur le support 70, notamment par l'intermédiaire des moyens d'accostage 65 et sous l'effet des moyens de rappel 9.

Pour ce faire, selon un mode préférentiel de réalisation, comme visible notamment sur les figures 10 et 11 montrant deux étapes successives lors de l'accostage d'un sabot 60, le support 70 peut comprendre une plaque inclinée selon une pente descente depuis l'amont vers l'aval. De plus, les moyens d'accostage 65 peuvent alors comprendre au moins une paire d'ergots 650,651, solidaires du sabot 60. Ces deux ergots 650,651 sont espacés sur la longueur du sabot 60, en particulier de son bloc 61. Ces deux ergots 650,651 sont aussi positionnés verticalement par rapport au bloc 61 à des hauteurs différentes, de manière à reproduire ladite pente de la plaque inclinée : l'ergot arrière 650 situé en amont étant alors plus haut que l'ergot avant 651 situé en aval. Selon le de mode de réalisation représenté notamment sur la figure 3, les ergots 650,651 sont fixés de part et d'autre sur le moyen de préhension 64. On notera que la pente peut être de quelques degrés, notamment comprise entre 3 à 20°. Ladite pente peut être de préférence de 5°. Une telle pente est modélisée notamment sur les figures 7 et 8.

Dès lors, au moment de la dépose, la descente de la plaque du support 70 du moyen de déplacement vertical s'effectue jusqu'à ce que la face inférieure de chaque moyen de poussée 6 viennent au contact de la surface du convoyeur amont 20, qui entraîne alors chaque sabot 60. Au moment de récupérer les sabots 60, l'inclinaison de la plaque autorise l'accostage de chaque moyen de poussée 6, sous l'effet des moyens de rappel 9, jusqu'à ce que les sabots 60 se retrouvent soulevés et ne touchent plus la surface du convoyeur amont 20. Entre la dépose et l'accostage, il est possible de remonter un peu la plaque sous l'action du moyen de déplacement vertical 7, afin d'améliorer l'accostage et le soulèvement des moyens de poussée 6.

On notera que la motorisation des moyens de rappel 9 lors du déploiement mais surtout lors du retour en repliement/enroulement peut être commandée automatiquement ou bien manuellement, notamment par l'intermédiaire d'une manivelle. Une telle motorisation peut être prévue unique pour l'ensemble des moyens de poussée 6 ou bien indépendante, au travers d'un actionnement distinct.

L'invention concerne aussi un procédé de vidange de produits 1 au sein d'une ligne de production et de conditionnement. Un tel procédé de vidange est préférentiellement prévu pour la mise en oeuvre dudit dispositif d'accompagnement 5.

Dans un tel procédé de vidange, on transporte un flux de produits 1 en au moins une file en face supérieure d'au moins un convoyeur 2, de préférence plusieurs convoyeur amont 20 et convoyeur aval 21, notamment séparés par une zone morte 3. On transporte lesdits produits en files, selon une direction de déplacement depuis l'amont vers l'aval.

De plus, en fin dudit flux, on dépose au niveau d'une position amont, derrière chaque file après le passage de ladite position amont du dernier produit 1 situé en amont de chaque file, des moyens de poussée 6 de chaque dernier produit 1.

On notera que le passage depuis un mode de production vers un mode dégradé dit « de vidange » en fin de flux de produits 1, peut être déterminer manuellement par un opérateur surveillant le flux, mais préférentiellement de façon automatique.

A cet effet, une détection peut être envisagée au niveau du convoyeur amont 20, de préférence au niveau d'au moins un couloir 4, de préférence aux niveaux de tous les couloirs 4, afin de détecter la présence de produits 1 ou leur passage récurrent. Une telle détection peut être effectuée par un capteur 10 ou plusieurs capteurs 10 adapté, comme modélisé sur la figure 4. Dès lors, l'absence de détection d'un produit 1 dans un ou plusieurs couloirs 4 génère un signal, qui peut automatiquement basculer le fonctionnement de l'installation en mode vidange ou informer un opérateur et lui laisser le choix de ce basculement vers la vidange ou non. Cette détection peut aussi commander l'arrêt ou le ralentissement des convoyeurs 2,20,21 et/ou l'actionnement du dispositif d'accompagnement 5, notamment la descente des moyens de poussée 6 par le moyen de déplacement vertical 7 jusqu'à leur dépose sur ledit convoyeur amont 20.

Ensuite, chacun des moyens de poussée 6 est déplacé jusqu'à une position avale située en aval de ladite position amont, à savoir depuis la position de dépose jusqu'à la position où chaque moyen de poussée 6 s'arrête sur ladite zone morte 3.

Avantageusement, on rappelle en déplacement en sens inverse lesdits moyens de poussée 6 depuis ladite positon avale jusqu'à ladite position amont.

On peut rappeler automatiquement selon ledit sens inverse les moyens de poussée 6. Ce rappel peut s'effectuer sous l'action d'une motorisation contrôlée automatiquement ou manuellement, notamment par un opérateur actionnant une manivelle. L'enclenchement de ce rappel peut aussi être commandé par un opérateur ou bien automatiquement par une détection appropriée.

Ce rappel fait intervenir notamment les composants du dispositif d'accompagnement 5 précédemment décrit.

Selon un mode spécifique de réalisation, le procédé de vidange peut consister à rappeler les moyens de poussée 6 par rotation sens inverse dudit convoyeur 2, de préférence du convoyeur amont 20.

Comme évoqué précédemment, l'invention concerne aussi une installation de conditionnement de produits 1. Une telle installation comprend au moins un convoyeur amont 20 d'alimentation en produits 1 et un convoyeur aval 21. De plus, l'installation comprend une zone de glissement, dite « zone morte » 3, située entre le convoyeur amont 20 et de convoyeur aval 21. L'installation comprend encore au moins un couloir 4 s'étendant au moins le long d'une partie desdits convoyeurs 21,21, ledit au moins un couloir délimitant au moins une file correspondante de produits 1. L'installation comprend aussi au moins un poste de groupage en rangs des produits 1 de chaque file, ledit poste de groupage étant situé au niveau dudit convoyeur amont 21.

En outre, un tel poste de groupage dit « de sélection » peut comprendre des doigts, comme précédemment évoqué, afin de séparer les produits 1 dans le sens de défilement, en vue de former des lots d'un ou plusieurs rangs de produits 1 transversalement dans les couloirs 4. Chaque lot est formé généralement juste avant une étape de conditionnement, notamment en fardeau.

A cet effet, préférentiellement, l'installation de conditionnement peut comprendre un poste de fardelage situé en aval dudit poste de groupage.

L'installation de conditionnement peut comprendre un poste d'encaissage situé en aval dudit poste de groupage.

Avantageusement, ladite installation comprend en amont dudit poste de groupage, le dispositif d'accompagnement 5 des produits 1.

## Revendications

1. Dispositif d'accompagnement (5) de produits (1) convoyés au sein d'une ligne de production et de conditionnement, lesdits produits (1) étant transportés en face supérieure d'au moins un convoyeur (2,20,21) en au moins une file le long d'au moins un couloir (4) correspondant selon une direction de déplacement depuis l'amont vers l'aval, ledit dispositif d'accompagnement (5) comprenant :
- des moyens de poussée (6) de chaque dernier produit (1) situé en amont de chaque file ;
- chaque moyen de poussée (6) étant mobile depuis une position amont jusqu'à une position avale ;
**caractérisé en ce qu'**il comprend :
- des moyens de rappel (9) desdits moyens de poussée (6) depuis ladite position avale jusqu'à ladite position amont,
chaque moyen de poussée (6) étant mobile au moins depuis l'amont vers l'aval selon un déplacement libre induit par ledit au moins un convoyeur (2, 20, 21).

2. Dispositif d'accompagnement (5) selon la revendication 1, **caractérisé en ce qu'**il comprend un moyen de déplacement vertical (7) desdits moyens de poussée (6) entre une position de dépose et une position escamotée, et inversement.

3. Dispositif d'accompagnement (5) selon l'une quelconque des revendications précédentes, **caractérisé en ce qu'**il comprend un moyen d'écartement desdits moyens de poussée (6) de façon indépendante les uns des autres et transversalement par rapport à ladite direction de déplacement.

4. Dispositif d'accompagnement (5) selon l'une quelconque des revendications précédentes, **caractérisé en ce qu'**il comprend un châssis (8) supportant lesdits moyens de poussée (6) et configuré pour s'étendre au-dessus dudit au moins un convoyeur (2,20,21).

5. Dispositif d'accompagnement (5) selon l'une quelconque des revendications précédentes, **caractérisé en ce que** lesdits moyens de poussée (6) comprennent une pluralité de sabots (60) indépendants pourvus :
- en face inférieure au moins une surface adhérente (63) ;
- en face située en aval, au moins un organe de poussée (62) ;
- supérieurement de moyens de préhension manuelle (64) ;
- des moyens d'accostage (65) ;
et/ou
- de moyens d'arrimage (66).

6. Dispositif d'accompagnement (5) selon l'une quelconque des revendications précédentes, **caractérisé en ce que** lesdits moyens de rappel (9) comprennent :
- des moyens de liaison (90) de chacun desdits moyens de poussées (6) ;
- au moins un moyen de déploiement desdits moyens de liaison (90) depuis la position amont vers la position aval, et inversement selon ledit sens inverse.

7. Dispositif d'accompagnement (5) selon la revendication précédente, **caractérisé en ce que** lesdits moyens de liaison (90) comprennent :
- au moins un filin/câble, lesdits moyens de déploiement comprenant un système de poulie (91) coopérant avec ledit au moins un câble ;
ou
- au moins une chaîne, lesdits moyens de déploiement comprenant au moins un pignon ou une poulie (91) coopérant en engrènement avec ladite au moins une chaîne ;
ou
- au moins un bras robotisé préhenseur de chacun desdits moyens de poussée (6).

8. Installation de conditionnement de produits, comprenant au moins :
- un convoyeur amont d'alimentation en produits (20) ;
- un convoyeur aval (21) ;
- une zone de glissement dite « zone morte »(3) située entre le convoyeur amont (20) et de convoyeur aval (21) ;
- au moins un couloir (4) s'étendant au moins le long d'une partie desdits convoyeurs (20,21), ledit au moins un couloir (4) délimitant au moins une file correspondante de produits (1) ;
- au moins un poste de groupage en rangs des produits (1) de chaque file, ledit poste de groupage étant situé au niveau dudit convoyeur amont (21) ;
**caractérisée en ce que** ladite installation comprend en amont dudit poste de groupage, un dispositif d'accompagnement (5) des produits (1) selon l'une quelconque des revendications précédentes.

9. Installation de conditionnement selon la revendication précédente, **caractérisé en ce qu'**elle comprend un poste de fardelage ou un poste d'encaissage situé en aval dudit poste de groupage.

10. Procédé de vidange de produits (1) au sein d'une ligne de production et de conditionnement, dans lequel :
- on transporte un flux de produits (1) en au moins une file en face supérieure d'au moins un convoyeur (2,20,21), selon une direction de déplacement depuis l'amont vers l'aval ;
- en fin dudit flux, on dépose au niveau d'une position amont, derrière chaque file après le passage de ladite position amont du dernier produit (1) situé en amont de chaque file, des moyens de poussée (6) de chaque dernier produit (1) ;
- chacun des moyens de poussée (6) est déplacé jusqu'à une position avale située en aval de ladite position amont ;
**caractérisé en ce que** ledit procédé met en oeuvre le dispositif d'accompagnement (5) des produits (1) selon l'une quelconque des revendications 1 à 7 et **en ce qu'**on rappelle en déplacement retour lesdits moyens de poussée (6) depuis ladite positon avale jusqu'à ladite position amont.

11. Procédé de vidange selon la revendication précédente, caractérisé en qu'on rappelle automatiquement en sens inverse les moyens de poussée (6).

12. Procédé de vidange selon la revendication précédente, caractérisé en qu'on rappelle les moyens de poussée (6) par rotation sens inverse dudit convoyeur amont (20).

## Patentansprüche

1. Vorrichtung zur Begleitung (5) von Produkten (1), die innerhalb einer Produktions- und Verpackungsstrecke befördert werden, wobei die Produkte (1) auf der Oberseite wenigstens eines Förderers (2, 20, 21) in wenigstens einer Reihe entlang wenigstens einer entsprechenden Bahn (4) in einer Bewegungsrichtung von stromauf nach stromab transportiert werden, wobei die Begleitvorrichtung (5) Folgendes umfasst:
- Mittel zum Anschieben (6) jedes letzten Produkts (1), das sich stromauf jeder Reihe befindet;
- wobei jedes Anschiebemittel (6) von einer stromaufwärtigen Position bis zu einer stromabwärtigen Position bewegbar ist;
**dadurch gekennzeichnet, dass** sie Folgendes umfasst:
- Mittel zum Rückstellen (9) der Anschiebemittel (6) aus der stromabwärtigen Position bis zur stromaufwärtigen Position,
wobei jedes Anschiebemittel (6) wenigstens von stromauf nach stromab in einer freien Bewegung bewegbar ist, die von dem wenigstens einen Förderer (2, 20, 21) bewirkt wird.

2. Begleitvorrichtung (5) nach Anspruch 1, **dadurch gekennzeichnet, dass** sie ein Mittel zur vertikalen Bewegung (7) der Anschiebemittel (6) zwischen einer Absetzposition und einer eingefahrenen Position und umgekehrt umfasst.

3. Begleitvorrichtung (5) nach einem der vorhergehenden Ansprüche, **dadurch gekennzeichnet, dass** sie ein Mittel zur Beabstandung der Anschiebemittel (6) unabhängig voneinander und quer zur Bewegungsrichtung umfasst.

4. Begleitvorrichtung (5) nach einem der vorhergehenden Ansprüche, **dadurch gekennzeichnet, dass** sie ein Gestell (8) umfasst, das die Anschiebemittel (6) trägt und dazu ausgebildet ist, sich oberhalb des wenigstens einen Förderers (2, 20, 21) zu erstrecken.

5. Begleitvorrichtung (5) nach einem der vorhergehenden Ansprüche, **dadurch gekennzeichnet, dass** die Anschiebemittel (6) eine Mehrzahl von unabhängigen Schlitten (60) umfassen, die mit Folgendem versehen sind:
- an der Unterseite wenigstens eine haftende Fläche (63);
- an der stromabwärtigen Seite wenigstens ein Anschiebelement (62);
- oben Handgreifmittel (64);
- Andockmittel (65);
und/oder
- Anbindemittel (66).

6. Begleitvorrichtung (5) nach einem der vorhergehenden Ansprüche, **dadurch gekennzeichnet, dass** die Rückstellmittel (9) Folgendes umfassen:
- Verbindungsmittel (90) jedes der Anschiebemittel (6);
- wenigstens ein Mittel zum Ausfahren der Verbindungsmittel (90) aus der stromaufwärtigen Position zur stromabwärtigen Position und umgekehrt in der umgekehrten Richtung.

7. Begleitvorrichtung (5) nach dem vorhergehenden Anspruch, **dadurch gekennzeichnet, dass** die Verbindungsmittel (90) Folgendes umfassen:
- wenigstens eine Leine bzw. ein Seil, wobei die Ausfahrmittel ein Rollensystem (91) umfassen, das mit dem wenigstens einen Seil zusammenwirkt;
oder
- wenigstens eine Kette, wobei die Ausfahrmittel wenigstens ein Zahnrad oder eine Rolle (91) umfassen, das bzw. die eingreifend mit der wenigstens einen Kette zusammenwirkt;
oder
- wenigstens einen Robotergreifarm für jedes der Anschiebemittel (6).

8. Produktverpackungsanlage, die wenigstens Folgendes umfasst:
- einen stromaufwärtigen Förderer zur Produktzufuhr (20);
- einen stromabwärtigen Förderer (21);
- eine Gleitzone, die "tote Zone" (3), die sich zwischen dem stromaufwärtigen Förderer (20) und dem stromabwärtigen Förderer (21) befindet;
- wenigstens eine Bahn (4), die sich wenigstens entlang eines Abschnitts der Förderer (20, 21) erstreckt, wobei die wenigstens eine Bahn (4) wenigstens eine entsprechende Reihe von Produkten (1) begrenzt;
- wenigstens eine Station zur Gruppierung der Produkte (1) jeder Reihe zu Gliedern, wobei sich die Gruppierungsstation am stromaufwärtigen Förderer (21) befindet;
**dadurch gekennzeichnet, dass** die Anlage stromauf der Gruppierungsstation eine Vorrichtung zur Begleitung (5) der Produkte (1) nach einem der vorhergehenden Ansprüche umfasst.

9. Verpackungsanlage nach dem vorhergehenden Anspruch, **dadurch gekennzeichnet, dass** sie eine Station zur Bündelung oder eine Station zur Kistenverpackung umfasst, die sich stromab der Gruppierungsstation befindet.

10. Verfahren zur Leerung von Produkten (1) innerhalb einer Produktions- und Verpackungsstrecke, wobei:
- ein Strom von Produkten (1) in wenigstens einer Reihe auf der Oberseite wenigstens eines Förderers (2, 20, 21) in einer Bewegungsrichtung von stromauf nach stromab transportiert wird;
- am Ende des Stroms werden an einer stromaufwärtigen Position hinter jeder Reihe nach dem Passieren der stromaufwärtigen Position durch das letzte Produkt (1), das sich stromauf jeder Reihe befindet, Mittel zum Anschieben (6) jedes letzten Produkts (1) abgesetzt;
- jedes der Anschiebemittel (6) wird bis zu einer stromabwärtigen Position bewegt, die sich stromab der stromaufwärtigen Position befindet;
**dadurch gekennzeichnet, dass** das Verfahren die Vorrichtung zur Begleitung (5) der Produkte (1) nach einem der Ansprüche 1 bis 7 verwendet, und dadurch, dass die Anschiebemittel (6) in einer Zurückbewegung aus der stromabwärtigen Position bis zur stromaufwärtigen Position zurückgestellt werden.

11. Leerungsverfahren nach dem vorhergehenden Anspruch, **dadurch gekennzeichnet, dass** die Anschiebemittel (6) automatisch in umgekehrter Richtung zurückgestellt werden.

12. Leerungsverfahren nach dem vorhergehenden Anspruch, **dadurch gekennzeichnet, dass** die Anschiebemittel (6) durch Drehung des stromaufwärtigen Förderers (20) in umgekehrter Richtung zurückgestellt werden.

## Claims

1. Device (5) for accompanying products (1) conveyed in a production and packaging line, said products (1) being transported on the top face of at least one conveyor (2, 20, 21) in at least one line along at least one corresponding corridor (4) in a direction of displacement from upstream to downstream, said accompanying device (5) comprising:
- means (6) for pushing each last product (1) situated upstream of each line;
- each pushing means (6) being movable from an upstream position to a downstream position;
**characterized in that** it comprises:
- means (9) for returning said pushing means (6) from said downstream position to said upstream position,
each pushing means (6) being movable at least from upstream to downstream according to a free displacement induced by said at least one conveyor (2, 20, 21).

2. Accompanying device (5) according to Claim 1, **characterized in that** it comprises a means (7) for vertical displacement of said pushing means (6) between a depositing position and a retracted position, and vice versa.

3. Accompanying device (5) according to either one of the preceding claims, **characterized in that** it comprises a means for separating said pushing means (6) independently of one another and transversely with respect to said direction of displacement.

4. Accompanying device (5) according to any one of the preceding claims, **characterized in that** it comprises a frame (8) supporting said pushing means (6) and configured to extend above said at least one conveyor (2, 20, 21).

5. Accompanying device (5) according to any one of the preceding claims, **characterized in that** said pushing means (6) comprise a plurality of independent slats (60) provided:
- on the bottom face, with at least one adhering surface (63);
- on the face situated downstream, with at least one pushing member (62);
- on top, with manual gripping means (64);
- with docking means (65);
and/or
- with mooring means (66).

6. Accompanying device (5) according to any one of the preceding claims, **characterized in that** said return means (9) comprise:
- means (90) for linking each of said pushing means (6);
- at least one means for deploying said link means (90) from the upstream position to the downstream position, and vice versa in said reverse direction.

7. Accompanying device (5) according to the preceding claim, **characterized in that** said link means (90) comprise:
- at least one cord/cable, said deployment means comprising a pulley system (91) cooperating with said at least one cable;
or
- at least one chain, said deployment means comprising at least one pinion or one pulley (91) cooperating by meshing with said at least one chain;
or
- at least one prehensile robotized arm for each of said pushing means (6).

8. Product packaging installation, comprising at least:
- one upstream conveyor for supplying products (20);
- one downstream conveyor (21);
- one slip zone, called "dead zone" (3), situated between the upstream conveyor (20) and downstream conveyor (21);
- at least one corridor (4) extending at least along a part of said conveyors (20, 21), said at least one corridor (4) delimiting at least one corresponding line of products (1);
- at least one station for grouping together products (1) of each line in rows, said grouping station being situated at said upstream conveyor (21);
**characterized in that** said installation comprises, upstream of said grouping station, a device (5) for accompanying products (1) according to any one of the preceding claims.

9. Packaging installation according to the preceding claim, **characterized in that** it comprises a film-wrapping station or a case-packing station situated downstream of said grouping station.

10. Method for emptying products (1) in a production and packaging line,
wherein:
- a flow of products (1) is transported in at least one line on the top face of at least one conveyor (2, 20, 21), in a direction of displacement from upstream to downstream;
- at the end of said flow, at an upstream position, behind each line after the last product (1) situated upstream of each line has passed said upstream position, pushing means (6) for each last product (1) are deposited;
- each of the pushing means (6) is displaced to a downstream position situated downstream of said upstream position;
**characterized in that** said method implements the device (5) for accompanying products (1) according to any one of Claims 1 to 7 and **in that** said pushing means (6) are returned in backward displacement from said downstream position to said upstream position.

11. Emptying method according to the preceding claim, **characterized in that** the pushing means (6) are returned automatically in reverse direction.

12. Emptying method according to the preceding claim, **characterized in that** the pushing means (6) are returned by rotation in reverse direction of said upstream conveyor (20).
